# EUROPEAN PATENT APPLICATION

(11) **EP 3 692 943 A1**
(43) Date of publication of application: **12.08.2020**
(21) Application number: 19172030.9
(22) Date of filing: 30.04.2019
(51) Int. Cl.: A61C 1/00, A61B 17/00

(54) **DENTAL CONTROL UNIT**

(30) Priority: 08.02.2019 US 201916350986
(71) Applicant: Jones, Clark L., Cave Creek, Arizona 85327 (US)
(72) Inventor: Jones, Clark L., Cave Creek, Arizona 85327 (US)
(74) Representative: MacLachlan & Donaldson

(57) **Abstract**

A control system for dental apparatus enables a remote foot control unit to generate the instruction necessary for an electronic valve assembly in the apparatus to control air and water to a dental handpiece and to control the speed at which a drill in the handpiece operates.

## Description

This invention relates to control units.

More particularly, the invention relates to a dental control unit.

Those of skill in the art have for many years endeavored to provide improved control units in the dental and other fields.

Accordingly, it would be highly desirable to provide an improved control unit.

Therefore, it is an object of the instant invention to provide an improved control unit.

This, and other and further objects of the instant invention will be apparent to those skilled in the art from the following detailed description thereof, taken in conjunction with the drawings, in which:
Fig. 1 is a perspective view illustrating a dental control unit constructed in accordance with the principles of the invention and with the foot control module in the centered, or neutral position;
Fig. 2 is a top view of the dental control unit of Fig. 1 illustrating additional construction details thereof;
Fig. 3 is a front view of the dental control unit of Fig. 1 illustrating additional construction details thereof;
Fig. 4 is a side view of the dental control unit of Fig. 1 illustrating additional construction details thereof;
Fig. 5 is a view of the dental control unit of Fig. 1 with the foot control module laterally displaced through an arc to the left in the direction of arrow A;
Fig. 6 is a top view of the dental control unit of Fig. 5 illustrating further construction details thereof;
Fig. 7 is a front view of the dental control unit of Fig. 5 illustrating further construction details thereof;
Fig. 8 is a side view of the dental control unit of Fig. 5 illustrating further construction details thereof;
Fig. 9 is a perspective view of the dental control unit of Fig. 1 with the foot control module laterally displaced through an arc to the right in the direction of arrow C;
Fig. 10 is a top view of the dental control unit of Fig. 9 illustrating further construction details thereof;
Fig. 11 is a front view of the dental control unit of Fig. 9 illustrating further construction details thereof;
Fig. 12 is a side view of the dental control unit of Fig. 9 illustrating further construction details thereof;
Fig. 13 is a perspective view of the dental control unit of Fig. 1 with the foot control plate and valve control module cover removed;
Fig. 14 is a top view of the dental control unit of Fig. 13 illustrating further construction details thereof;
Fig. 15 is a front view of the dental control unit of Fig. 13 illustrating further construction details thereof;
Fig. 16 is a side view of the dental control unit of Fig. 13 illustrating further construction details thereof;
Fig. 17 is a perspective view of the dental control unit of Fig. 13 with the input and output lines in the valve assembly removed to better illustrate the construction thereof;
Fig. 18 is a top view of the dental control unit of Fig. 17 illustrating further construction details thereof;
Fig. 19 is a front view of the dental control unit of Fig. 17 illustrating further construction details thereof;
Fig. 20 is a side view of the dental control unit of Fig. 17 illustrating further construction details thereof;
Fig. 21 is a perspective view illustrating the dental control unit of Fig. 17 with the foot control module removed;
Fig. 22 is a top view of the dental control unit of Fig. 21 illustrating further construction details thereof;
Fig. 23 is a top view of the dental control unit of Fig. 21 illustrating further construction details thereof;
Fig. 24 is a side view of the dental control unit of Fig. 21 illustrating further construction details thereof;
Fig. 25 is a perspective view of the foot control unit of Fig. 17 with a portion of the foot control module cut away to expose torsion springs which oppose lateral movement of the foot control module to the left or right of its centered neutral position;
Fig. 26 is an enlarged perspective view of a section of the foot control unit of Fig. 25 illustrating further construction details thereof;
Fig. 27 is a perspective view illustrating a portion of the foot control module;
Fig. 28 is a side view of the portion of the foot control module of Fig. 27 illustrating further construction details thereof;
Fig. 29 is a bottom view of the portion of the foot control module of Fig. 27 illustrating further construction details thereof;
Fig. 30 is a front view of the portion of the foot control module of Fig. 27 illustrating further construction details thereof;
Fig. 31 is a perspective view illustrating the valve module with its output and input lines and omitting the lines that carry incoming compressed air from valve 52 to valves 51 and 53;
Fig. 32 is a perspective view illustrating the valve module without its output and input lines and including the lines that carry incoming compressed air from valve 52 to valves 51 and 53;
Fig. 33 is a side view illustrating the output and input lines of the valve module;
Fig. 34 is a section view further illustrating the output and input lines of the valve module and taken along section lines H-H in Fig. 33;
Fig. 35 is a perspective view further illustrating the output and input lines of Fig. 33;
Fig. 36 is a perspective view further illustrating the output and input lines of Fig. 33;
Fig. 37 is a perspective view illustrating the contact between the ganged cam plates of the foot control module and the valves of the valve control module;
Fig. 38 is a front perspective view further illustrating the contact between the ganged cam plates of the foot control module and the valves of the valve control module;
Fig. 39 is a perspective view further illustrating the contact between the ganged cam plates of the foot control module and the valves of the valve control module;
Fig. 40 is a top view illustrating a foot control unit utilized in an alternate embodiment of the invention;
Fig. 41 is a perspective view of the foot control unit of Fig. 40 further illustrating constructive details thereof;
Fig. 42 is a front elevation view of the foot control unit of Fig. 40 further illustrating construction details thereof;
Fig. 43 is a side view of the foot control unit of Fig. 40 further illustrating construction details thereof;
Fig. 44 is a top view of the foot control unit of Fig. 40 partially disassembled to illustrate construction details thereof;
Fig. 45 is a perspective view of the foot control unit of Fig. 44 further illustrating construction details thereof;
Fig. 46 is a front elevation view of the foot control unit of Fig. 44 further illustrating construction details thereof;
Fig. 47 is a side view of the foot control apparatus of Fig. 44 further illustrating construction details thereof;
Fig. 48 is a top view of the foot control unit of Fig. 44 with the foot control module completely removed to illustrate addition construction details thereof;
Fig. 49 is a perspective view of the foot control unit of Fig. 48 further illustrating construction details thereof;
Fig. 50 is a front elevation view of the foot control unit of Fig. 48 further illustrating construction details thereof;
Fig. 51 is a side view of the foot control unit of Fig. 48 further illustrating construction details thereof;
Fig. 52 is an enlarged front elevation view of the valve control module illustrating construction details thereof;
Fig. 53 is an enlarged side perspective view of the valve control module illustrating construction details thereof;
Fig. 54 is a front side perspective view of the valve control module illustrating construction details thereof;
Fig. 55 is a side view of the valve control module, cam block assembly module, and sub-plate illustrating construction details thereof;
Fig. 56 is a perspective view of the valve control module, cam block assembly module, and sub-plate illustrating construction details thereof;
Fig. 57 is a front view of the valve control module, cam block assembly module, and sub-plate of Fig. 55 illustrating construction details thereof;
Fig. 58 is a perspective view of the foot control unit of Fig. 40 illustrating displacement of the foot plate from a neutral position toward the left;
Fig. 59 is a perspective view of the foot control unit of Fig. 40 illustrating displacement of the foot plate from a neutral position toward the right;
Fig. 60 is a top view of the foot control unit of Fig. 40 partially disassembled to illustrate construction details thereof;
Fig. 61 is a top view of the foot control unit of Fig. 40 with the foot control module completely removed to further illustrate construction detail of the foot control unit;
Fig. 62 is a front perspective view illustrating the electronic valve assembly mounted at the dental apparatus in accordance with the invention;
Fig. 63 is a rear perspective view further illustrating the electronic valve assembly of Fig. 62;
Fig. 64 is a perspective view of the foot control unit of Fig. 40 partially disassembled to illustrate construction details thereof;
Fig. 65 is a perspective view of the foot control unit of Fig 40 with the foot control module complete removed to illustrate further construction details of the foot control unit;
Fig. 66 is a perspective view of the foot control unit of Fig. 40 partially disassembled to illustrate construction details thereof;
Fig. 67 is a front view of the apparatus of Fig. 66 further illustrating construction details thereof;
Fig. 68 is a side view of the apparatus of Fig. 66 further illustrating construction details thereof; and,
Fig. 69 is a schematic illustrating the wireless transmission of data from the foot control unit to the electronic valve assembly, and further illustrating the electronic valve assembly pneumatically controlling the handpiece control block to send air and/or water to a dental handpiece, and, when desired to activate a drill in the handpiece.

Briefly, provided are improvements in dental apparatus. The dental apparatus comprises a dental high speed handpiece including at least one rotatable drill bit. The drill bit has at least two operative positions, a primary on operative position in which said drill bit is activated and is rotating, and, a secondary off operative position in which the drill bit is deactivated and is stationary. The dental apparatus also includes at least a first control line to deliver pressurized water to the dental handpiece; at least a second control line to deliver compressed air to the dental handpiece; and, at least a third control line to activate, deactivate, and control the speed of the drill bit. The improvements in the dental apparatus comprise a dental foot control apparatus to operate the first, second, and third control lines. The improvements comprise a housing positioned on a floor; a generally horizontally oriented plate pivotally mounted on said housing to be laterally displaceable through an arc by engaging the plate with a foot and pivoting the foot and the plate simultaneously through an arc; a plurality of horizontally oriented cam edges connected to the plate to move simultaneously with the plate; and, a plurality of actuable valves fixedly mounted on the housing and operatively associated with the cam edges and the first, second and third control lines. The plate and cam edges are simultaneously displaceable through at least five operative positions to actuate periodically selected ones of the valves. The operative positions include a first operative position (TABLE I, ZONE #1) in which the drill bit is activated and both pressurized air and pressurized water are delivered to the handpiece; a second operative position (TABLE I, ZONE #2) in which the drill bit is activated and compressed (coolant/chip) air is delivered to the handpiece; a third operative position (TABLE I, neutral/centered zone) in which the drill bit is deactivated, compressed air is not delivered to the handpiece, and pressurized water is not delivered to the handpiece; a fourth operative position (TABLE I, ZONE #3) in which the drill bit is deactivated and compressed air is delivered to the handpiece; and, a fifth operative position (TABLE I, ZONE #4) in which the drill bit is deactivated and pressurized water and compressed air are delivered to the handpiece.

In another embodiment of the invention, provided are improvements in combination with the dental apparatus. The dental apparatus comprises a dental high speed handpiece including at least one rotatable drill bit. The drill bit has at least two operative positions, a primary on operative position in which said drill bit is activated and is rotating, and a secondary off operative position in which said drill bit is deactivated and is stationary. The dental apparatus includes at least a first control line to deliver pressurized water to the dental handpiece; includes at least a second control line to deliver compressed air to the dental handpiece; and, includes at least a third control line to activate, deactivate, and control the speed of the drill bit. The improvements in the dental control system comprise a dental control system to operate said first, second, and third control lines. The dental control system comprises a foot control positioned on a floor. The foot control includes a housing; a generally horizontally oriented plate pivotally mounted on the housing and laterally displaceable through an arc by engaging the plate with a foot and pivoting the foot and the plate simultaneously laterally through an arc; and, at least one horizontally oriented cam edge connected to the plate to move simultaneously with the plate, and having at least one detent. The foot control also includes a unit operatively associated with the cam edge to increase the force required to pivot the plate when the detent is in registration with the fixed unit. The foot control also includes at least one sensor to determine the distance the plate is pivotally displaced through an arc from a neutral position, and to generate data defining the distance; and, includes a transmitter to generate a signal including the data.

The dental control system also includes a control unit mounted on the dental apparatus remote from the foot control. The control unit includes a plurality of actuable valves fixedly mounted on the unit and operatively associated with the first, second, and third control lines; includes a microprocessor to operate the valves; and, includes a receiver to receive the signal and transmit the data to the microprocessor to operate the valves.

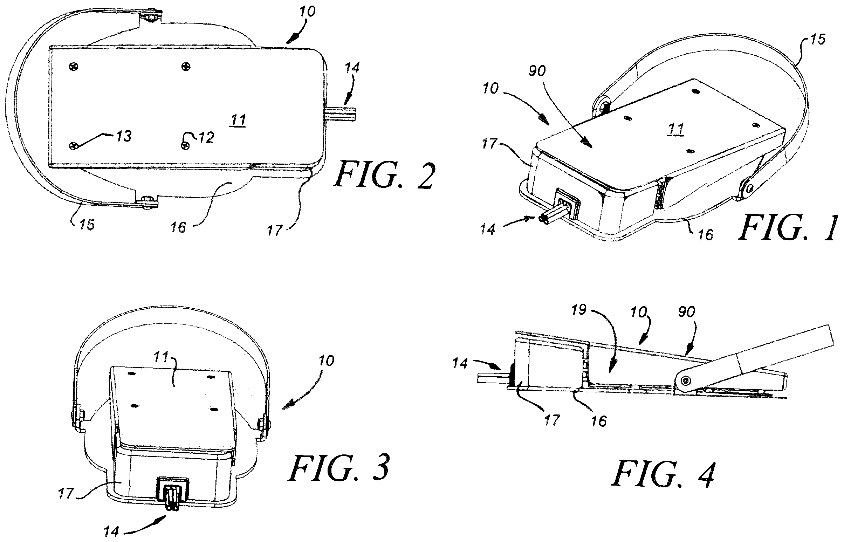

Turning now to the drawings, which depict the presently preferred embodiments of the invention for the purpose of illustration, and not limitation, of the invention, Figs. 1 to 37 illustrate a dental control unit constructed in accordance with the principles of the invention and generally indicated by reference character 10. At the outset of the development of the dental control unit 10 of the invention, the initial focus was on improving a conventional foot control unit which included a button that had to be depressed by a dentist's foot during operation of the foot control unit and a separate toggle switch which had to be separately activated for selecting wet or dry functions. This made it necessary for the operator change body position to look directly at the foot control to change between wet and dry functions thereby taking his attention away from the patient work field. Over many months, the conventional control unit morphed into dental control unit 10. Unexpected discoveries and advantages of the invention are set forth below.

Dental control unit 10 is designed to be retrofit to a conventional dental station. As is well known, a conventional dental station includes a handpiece with a rotatable drill bit. A pneumatically driven turbine rotates the drill bit. A first line leading into the dental station handpiece control block provides cooling compressed air to the handpiece; a second line into the dental station controls pressurized water to the handpiece control block by way of an air operated valve, and a third line into the dental station handpiece control block that provides compressed air to drive the turbine that rotates the drill bit. A fourth compressed air line leads from the compressed air source into, though, and out of the dental station to supply incoming compressed air to the foot control valve assembly. A separate pneumatically activated and controlled valve in the dental station controls the delivery of water under pressure to the handpiece using the air provided by the second line as a signal to open the air controlled water valve.

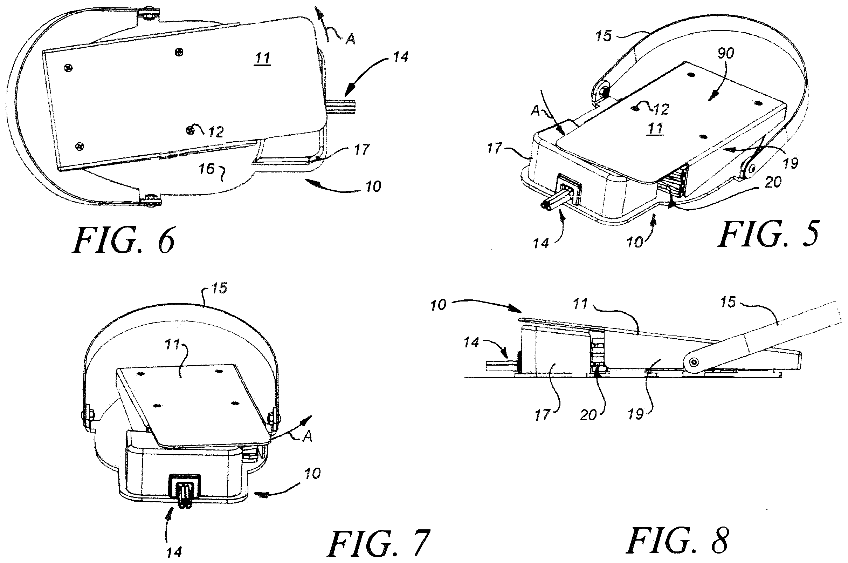

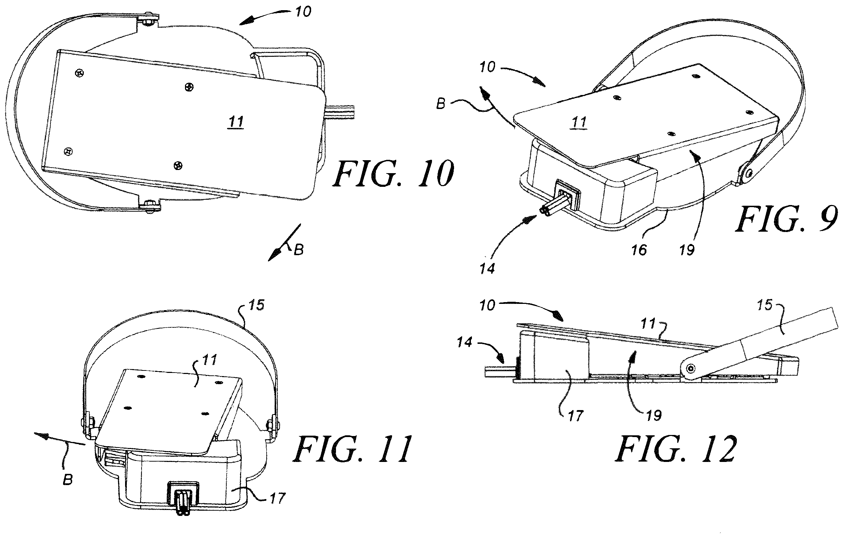

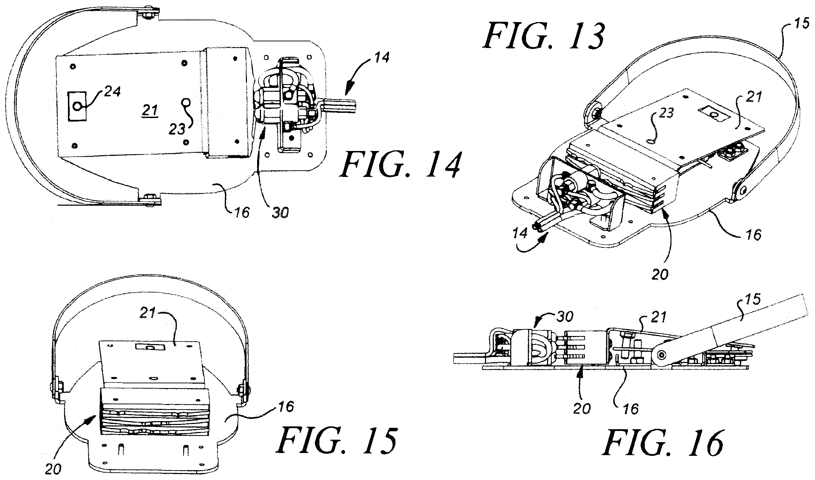

In Fig. 1, dental control unit 10 includes foot control module 90, foot plate 11, and cover 17. Cover 17 encloses valve control module 30 (Fig. 14). Control line bundle 14 extends outwardly from cover 17. Foot control module 90, valve control module 30, and other components of dental control unit 10 are mounted on base plate 16. Screws 12, 13 or other fasteners are used to secure foot plate 11 to sub-plate 21 (Fig. 13). In Figs. 1 to 4, foot plate 11 is in a centered, neutral position. During use of dental control unit 10, a dentist places on plate 11 one of the shoes (not shown) he is wearing. The toe of the shoe (and toes of the dentist's foot) points toward control line bundle 14. The dentist presses his foot against plate 11 and then turns his foot-and therefore his shoe-laterally to the left or right to pivot simultaneously plate 11 through an arc with his foot. For example, in Figs. 5 to 8, foot plate 11 has been laterally pivoted from the neutral position to the left in the direction of arrow A. And, in Figs. 9 to 12, foot plate 11 has been laterally pivoted from the neutral position to the right in the direction of arrow B. Although the arc through which plate 11 rotates can vary as desired, plate 11 currently laterally rotates to the left about twelve degrees from the neutral position and to the right about twelve degrees from the neutral position. Plate 11 can have an anti-slip surface.

Arcuate hoop or bail 15 is pivotally connected to base plate 16 and, when a dentist places his foot inside the hoop on plate 11, can be used to move dental control unit 10. Since the dentist's foot is already positioned inside the hoop on plate 11, in order to move unit 10, the dentist simply lifts his foot upwardly off plate 11 until his shoe contacts and lifts hoop 15. Lifting hoop 15 also lifts the other portions of unit 10 so that unit 10 can, by moving the dentist's foot to the left or right, be moved to the left or to the right, as desired. Since the operators foot is always positioned inside the hoop and "on" the foot control rather than adjacent to it he does not have to look away from the patient work field to pick up and move foot control 10.

In Figs. 13 to 16, the foot plate 11 has been removed from foot control module 90, exposing sub-plate 21. Similarly, cover 17 has been removed from over valve control module 30, exposing valve control module 30.

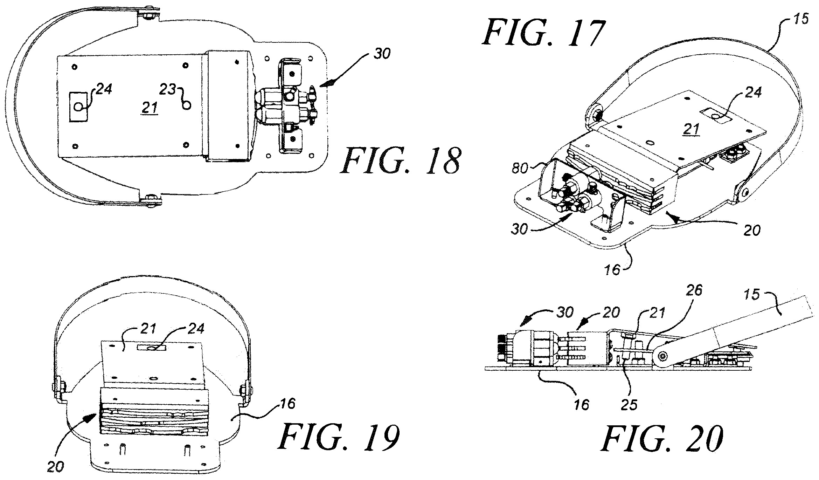

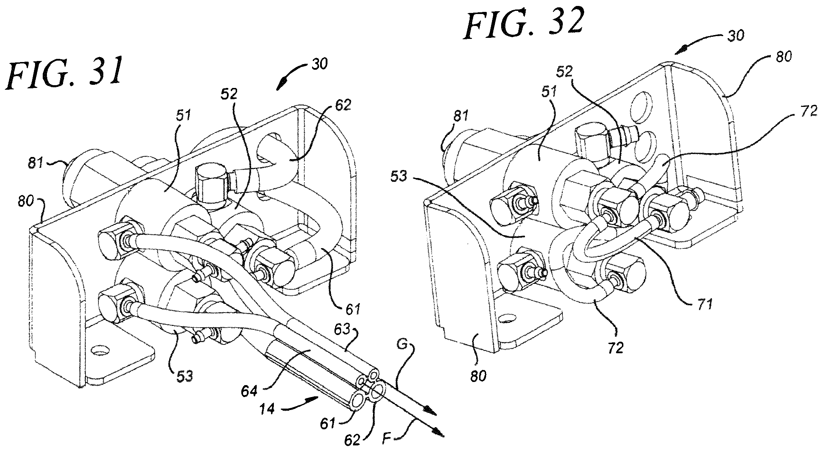

In Figs. 17 to 20, control line bundle 14 is deleted to better illustrate valve control module 30, and its interaction with the ganged cam plate module 20. Valve control module 30 includes bracket 80 on which three spring loaded pneumatic control valves 51, 52, and 53 (Figs. 31 and 32) are fixedly mounted.

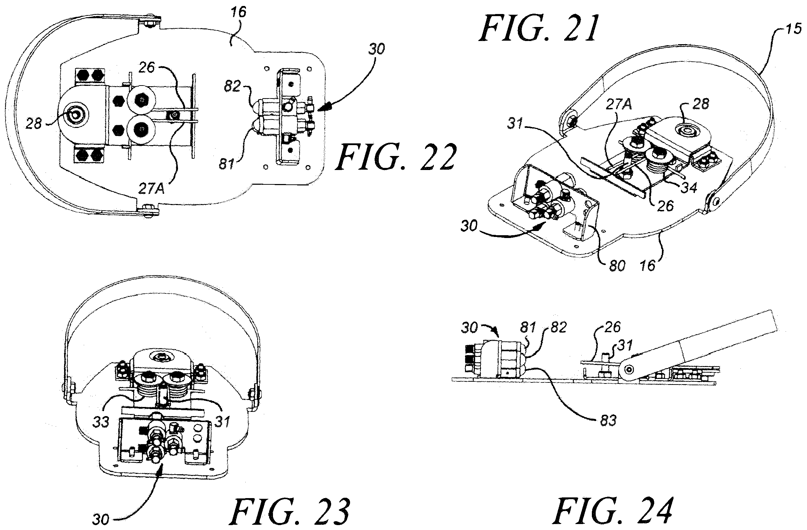

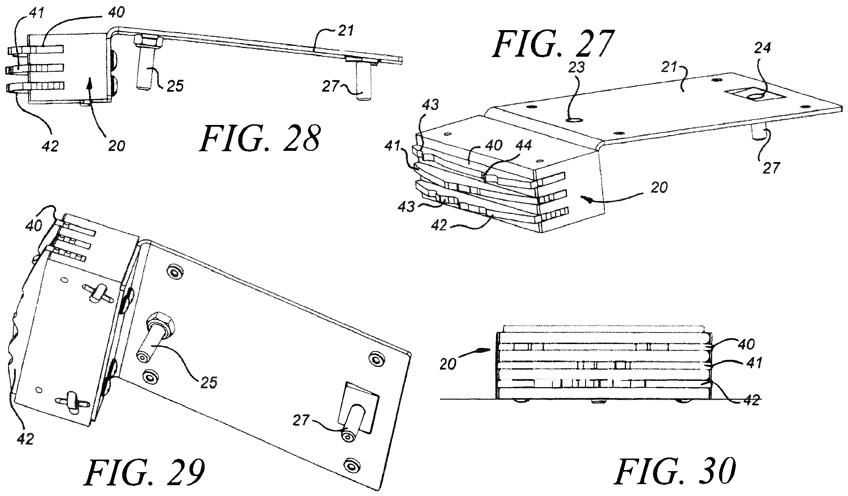

In Figs. 21 to 24, the remainder of the foot control module 90 has been removed to expose the portions of unit 10 on which foot control module 90 is mounted. As will be discussed further below, torsion springs 33 (Fig. 23) and 34 (Fig. 21) include arms 27A and 26, respectively, which tend to return the foot control module 90 back to the neutral position after module 90 is laterally displaced to the left in the direction of arrow A (Fig. 6) or to the right in the direction of arrow B (Fig. 9). Post 27 (Fig. 28) depends and extends downwardly from sub-plate 21. Post 27 is, when foot control module 90 is mounted as shown in Fig. 1, rotatably received by aperture 28 (Fig. 21). When control module 90 is laterally displaced from the neutral position to the left or right, post 27 rotates in aperture 28.

As is illustrated in Figs. 21 to 24, each spring loaded pneumatic control valve 51, 52, 53 has a ball bearing actuator 81, 82, 83 (Fig. 24), respectively, which rides along the edge of an associated cam plate 40, 41, 42 (Fig. 28), respectively, in cam plate module 20. Peaks 44 and valleys or detents 43 or other shapes and dimensions in the cam plates depress or release ball bearings 81 to 83 to open or close spring loaded pneumatic valves 51 to 53.

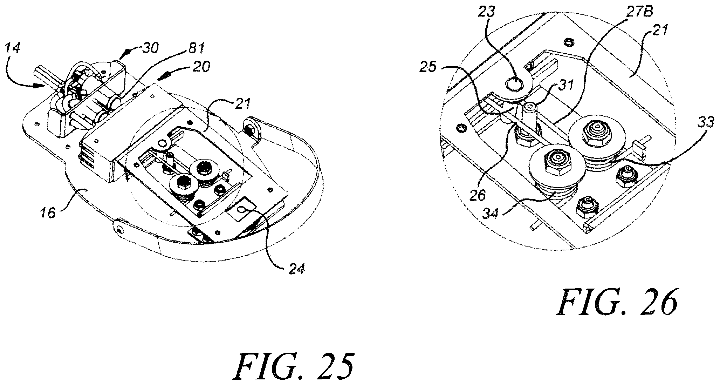

When control unit 10 is assembled in the manner depicted in Fig. 1, post 25 (Figs. 28 and 29) extends downwardly intermediate arms 26 and 27B in the manner shown in Fig. 26. Fixed upstanding post 31 (Fig. 26) also extends upwardly intermediate arms 26 and 27B. When foot plate 11 and sub-plate 21 laterally pivot to the right in the direction of arrow B (Fig. 9), spring 27A is displaced and further tensioned and, consequently, generates a force which acts to move foot module 20 back to the neutral position. When foot plate 11 and sub-plate 21 laterally pivot and move to the left in the direction of arrow A (Fig. 5), spring 26 is displaced and further tensioned and, consequently, generates a force which acts to move foot module 20 back to the neutral position. As noted, post 27 (Fig. 28) pivots in aperture 28 (Fig. 21) when foot module 20 is laterally displaced from the neutral position to the left or right.

In Figs. 25 and 26, a portion of sub-plate 21 is cut away to expose and better illustrate the functioning of torsion springs 33 and 34.

The fixed attachment of cam plate module 20 to sub-plate 21 is illustrated in Figs. 27 to 30.

Fig. 31 is a perspective view illustrating the valve module 30 with its hollow output and input lines, or tubing, and omitting the lines that carry incoming pressurized air from valve 52 to valves 51 and 53. Valve bundle 14 is connected to a comparable four (4) line bundle (not shown) in a dental station. This permits dental control unit 10 to be readily retrofitted to a dental station by simply connecting each line in bundle 14 to a comparable line in the dental station. Accordingly, line 61 is connected to a line in the dental station which carries compressed air from a dental station to valve module 30; line 62 carries compressed air from valve 52 (when valve 52 is open) to a line in the dental station which provides compressed air to drive the turbine in the handpiece which turns a drill bit in the handpiece; line 63 carries compressed air from valve 51 (when valve 51 is open) to an air pressure controlled valve in the dental station which provides water to the handpiece in the dental station; and, line 64 carries compressed cooling/chip air from valve 53 (when valve 53 is open) to a line in the dental station which provides cooling/chip air to the handpiece in the dental station.

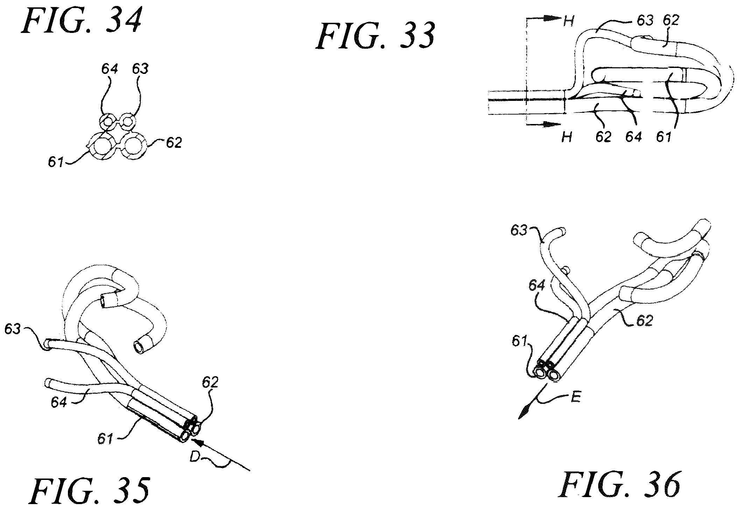

Compressed air flowing through line 63 travels in the direction of arrow G in Fig. 31. Compressed air flowing through line 64 travels in the direction of arrow F in Fig. 31. Compressed air traveling through line 62 travels in the direction of arrow E in Fig. 36. Compressed air traveling through line 61 from the dental station travels in the direction of arrow D in Fig. 35.

Fig. 32 is a perspective view illustrating the valve module without its output and input lines and including the hollow lines, or tubing, that carry incoming pressurized air from valve 52 to valves 51 and 53. Hollow line 71 carries pressurized air from valve 52 to valve 51. Hollow line 72 carries pressurized air from valve 51 to valve 53.

Valve 51 is a three-way valve. It exhausts air in hollow cylindrical line or tubing 63 when it closes so that the air operated water valve in the conventional dental unit can close and stop of flow of water to the drill handpiece in the dental station. Valve 53 is a two-way valve that is an on-off valve that controls the flow of compressed air to the handpiece in the dental station. The flow of compressed air through valve 53 is limited by the smaller diameter of hollow cylindrical line 64. While this diameter can vary as desired, it presently is about one-sixteenth of an inch. Valve 52 is also a two-way valve that is an on-off valve that controls the compressed air that flows through hollow cylindrical line 62 to drive the turbine which rotates the drill bit in the dental handpiece. While the diameter of line 62 (and lines 63 and 64) can vary as desired, it is presently about one-eighth of an inch. Cam 41 is shaped and dimensioned such that when valve 52 is open, it is completely, and not partially, opened; this so that the flow of air to the handpiece turbine is not reduced.

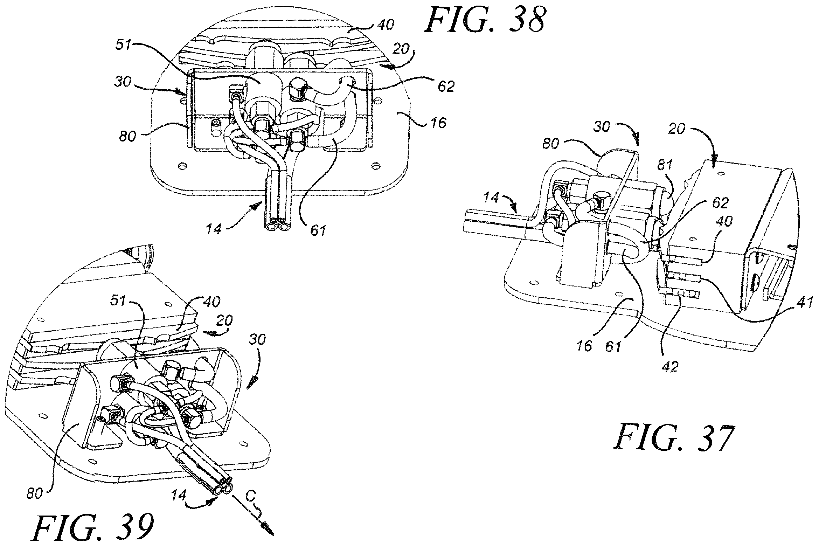

Figs. 37 to 39 illustrate the contact between the depressible ball bearings in the actuators of fixed valves 51, 52, 53 and the contoured edges of cam plates 40, 41, and 42.

An important function of the control unit 10 of the invention is that spring loaded pneumatic valves 51, 52, 53 are switched as a group to achieve combinations of valve settings that produce the necessary outputs at the handpiece of a dental station. This is achieved by using a group of ganged cam plates 40, 41, 42 that can open simultaneously two or three of the spring loaded pneumatic valves 51, 52, 53 as a group to get desired combinations of valve settings to produce selected outputs at the handpiece at the dental station.

Another important feature of the control unit 10 of the invention is that the neutral position (shown in Fig. 1) of the foot control module 90 is at the center of the arc of movement of module 90 and is not at the limit of travel of module 90 to the left or right. Placing the neutral position of foot control module 90 in the center of the arc enables desired functions to be divided into smaller groups and placed on either side of the neutral position of foot control module 90. For example, the handpiece functions with the drill operating are to the left of center and the handpiece functions with the drill not operating (those replacing the 3-way syringe to be explained later) are to the right of center.

A further important feature of the control unit 10 of the invention is that a dentist can control the speed of the drill bit, the flow of water to the handpiece (either on or off), and the flow of cooling air to the handpiece (either on or off), without taking his eyes off the field of work in a patient's mouth. The dentist simply relies on the rotation with his foot of the foot control module 90 into and/or through various zones. Further, the dentist relies by "feel" on the rotation with his foot of control module 90, and does not need to actually look at control module 90. This is important because the sharp and dangerous instruments used in dentistry make it essential that the dentist never look away from the patient work field without first, abandoning his finger rested work position, removing the drill from the patient's mouth, and taking it safely away from the patient's face, before directing his attention to any other task such as looking for a separate water toggle switch on a foot control that is on the floor as is now required.

Still another important feature of the control unit of the invention is that a dentist can readily "feel" position indicating detents when module 90 is in various desired positions of the foot control module 90. First, when the dentist uses his foot to move module 90 to the right or left of the neutral position, torsion springs 33 and 34 produce resistance which the dentist can feel. Second, when module 90 reaches the limit of its travel to the right or left, it reaches a stop and can move no further. The dentist can readily "feel" when module 90 reaches such a stop. Third, when a spherical ball bearing actuator of a valve 51, 52, 53 moves along the edge of a cam plate and up and over a peak 44 or into a detent 43, this changes the force required by a dentist to overcome rotational resistance and move module 90 to the left or right. In the practice of the invention, it is preferred that a dentist can readily "feel" this change in rotational resistance. For example, if a spring loaded spherical ball bearing 81, 82, 83 drops into a detent 43, the dentist can feel the increase in rotational resistance because the dentist's foot and leg must generate more force to move module 90. The shape and dimension of the edges of the ganged cam plates 40, 41, 42 can be varied as desired, but an important objective of the invention is to configure the cam edges such that a dentist can "feel" changes in rotational resistance when the module 90 is pivoted to desired positions or is pivoting through desired zones.

As would be appreciated by those of skill in the art, each pneumatic valve 51, 52, 53 is opened-or activated--by depressing the valve's spring loaded spherical ball bearing actuator "into" the valve assembly. Cam plates 40, 41, 42 are configured to accomplish, in conjunction with valves 51-53, this function by producing compressive forces on the spherical bearing in each valve actuator thereby actuating valves 51-53. The compressive forces depress each spring loaded spherical bearing actuator from its normal operative position. This opens the valve or valves. When the compressive force on a spring loaded bearing 81, 82, 83 (Fig. 24) is released, the bearing returns to its normal operative position and the valve closes.

Another important feature of the invention is that a valve 51, 52, 53 can remain "on" or open while foot control module 90 is pivoted from the neutral position through a selected distance or zone (i.e., is pivoted through an arc having a selected length). This enables-as earlier described--the cam-valve system of the invention to activate simultaneously two or more desired features of a dental station using only a single control plate. For example, a drill bit can be rotated simultaneously with water and/or air being directed to the drill or handpiece of a dental station.

A further important feature of the invention is that control unit 10 allows a dentist to utilize a single control plate by "feel" to quickly select and move between "cut wet" and "cut dry" functions "on the fly" without stopping the drill, or, between other new added functions (air only or air/water spray without the drill running) which can be achieved with control unit 10.

Yet another important feature of the invention is that control unit 10 obviates the necessity of having to change instruments to use a three-way syringe to produce air or air-water spray to wash or dry the tooth as these functions can be selected with the foot using control unit 10 and provided directly from the high speed handpiece without diverting attention from the patient work field or changing the operators body position.

Still a further important feature of the invention is that it utilizes the ability of a conventional handpiece to receive cooling water and cooling air and utilize them for the newly added functions of washing and drying the tooth without the drill running as well as to operate a high speed drill in the conventional manner. Adding additional control capability to switch quickly between cutting wet or dry and the additional functions of washing and drying the tooth while utilizing the same three control lines as in past methods facilitates retrofitting the control unit 10 to a conventional dental station.

Yet still another important feature of the invention is that the dentist need not look at the control unit 10 of the invention to find and activate separate switches. Therefore, while operating the control unit 10 with his foot on the single control plate 11 to select various functions, the dentist need not-while working in the mouth of a patient-divert his visual attention, abandon his finger rested working position, or reposition his body in order to look at the control unit 10.

TABLE I below sets forth the various zones currently activated during use of the dental control unit 10 of the invention, although the order of such zones or the zone(s) used or not used can, as would be appreciated by those of skill in the art, be varied as desired. For example, a zone in which water only is on (and not cooling air or the drill) could be added.

TABLE I with zones from #1 to #4 plus a center/neutral/off zone with corresponding detent illustrate when, in response to rotation of plate 11, (Figs. 1, 2, 3) "coolant/ chip air", water, and the drill, are activated in the presently preferred embodiment of the invention.

The location of the **1^{st}, 2^{nd}, 3^{rd}, and 4^{th}** detents for operator "feel" are noted in both TABLE I and TABLE II and are in the same relative locations for both control unit 10 and control unit 10A.

**TABLE I: CONTROL UNIT 10**

| Showing valves 51, 52, 53 that are "on/open", or, "off/ closed" when foot control module 90 is in neutral or in various zones of function. | | | | | |
|---|---|---|---|---|---|
| | **4^{th} detent** | **3^{rd} detent** | **1^{st} detent** | **2^{nd} detent** | |
| VALVE | ZONE #1 Drill cuts with water and cooling air | ZONE #2 Drill cuts with cooling air | NEUTRAL Drill, water, and cooling air off | ZONE #3 Drill off; cooling air on | ZONE #4 Drill off; spray on-water and cooling air |
| 51 | OPEN | CLOSED | CLOSED | CLOSED | OPEN |
| 52 | OPEN | OPEN | CLOSED | CLOSED | CLOSED |
| 53 | OPEN | OPEN | CLOSED | OPEN | OPEN |

| | | | | | |
|---|---|---|---|---|---|
| Notes for TABLE I: (a) (**1st detent**) In ZONE #3: Foot control module 90 is laterally rotated from neutral to t the right (b) (**2^{nd} detent**) I n ZONE #4: Foot control module 90 is laterally rotated from neutral to the right past ZONE #3. (c) (**3^{rd} detent**) In ZONE #2: Foot control module 90 is laterally rotated from neutral to the left. (d) (**4^{th} detent**) In ZONE #1: Foot control module 90 is laterally rotated from neutral to the left past ZONE #2. | | | | | |

In one embodiment of the invention, a dentist acclimates himself or herself to operation of control unit 10 by practicing with his foot (with or without wearing a shoe) laterally moving module 90 (and therefore plate 11) through arcs to the left or right of the neutral position until desired positions of module 90 are achieved and until the dentist can readily sense and "feel" with his foot and leg that such desired positions have been achieved without looking at control unit 10. Such positions could, by way of example, be the positions set forth about in TABLE I.

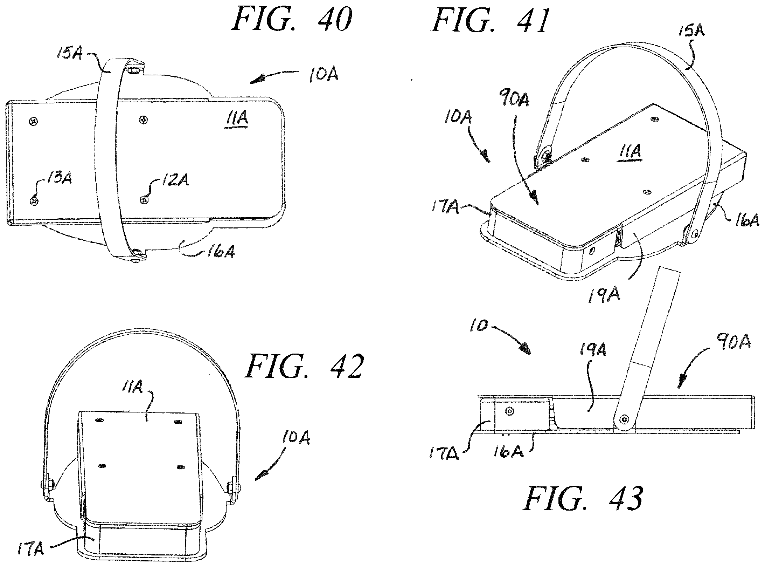

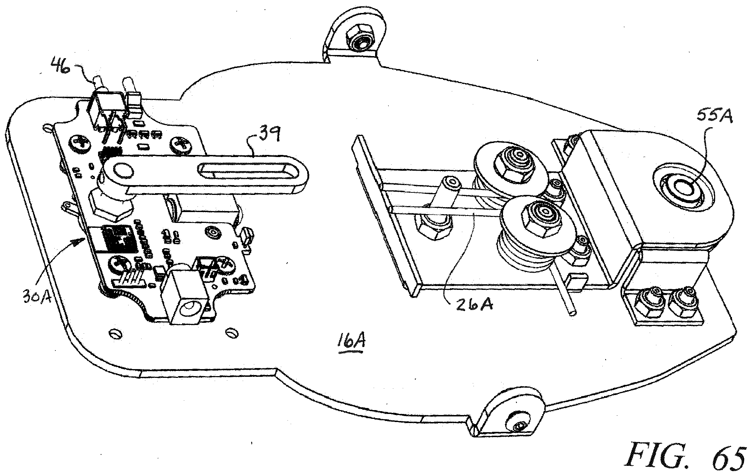

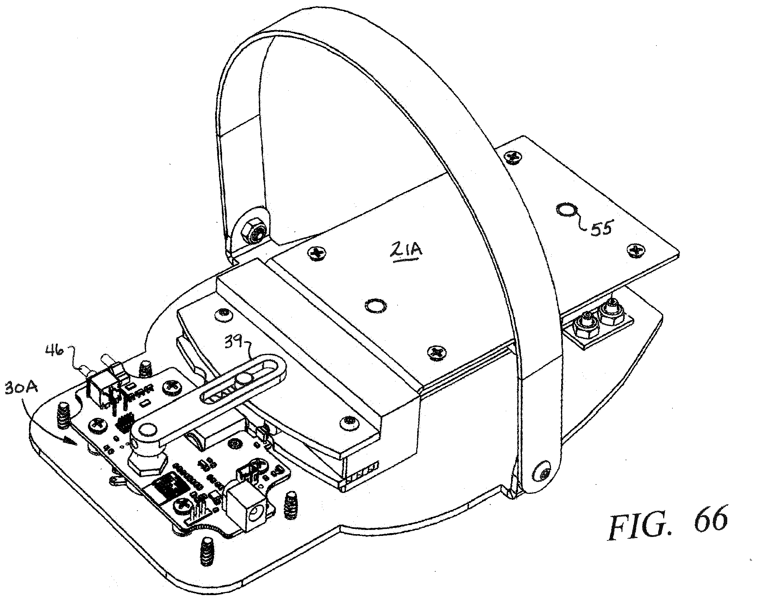

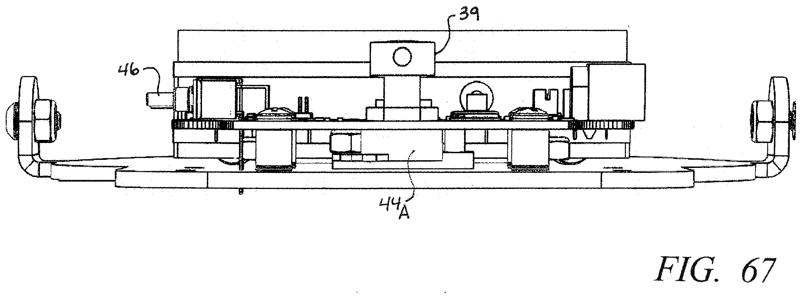

An alternate embodiment of the invention is illustrated in Figs. 40 to 69 and is described below.

It initially was believed that users would use a foot control of the type illustrated in Figs. 1 to 39 by placing the heel of a foot on the pivot point of the rotatable foot plate 11 and by then moving the toe of the foot to the left (arrow A in Fig. 5) or right (arrow B in Fig. 11) in order to rotate the foot plate through an arc to activate the various control functions. It was unexpectedly discovered that some users preferred to reverse this procedure and, instead, to place the toe of a foot on the pivot point of the foot plate 11 and then rotate the heel of the foot to the left or right through an arc to activate the various control functions. This unexpected preference by some users revealed concerns that indicated the need for more flexibility in how the operator could use the foot control.

First, rotating the heel of the foot to the left or right (instead of the toes) changes the direction in which the four hole tubing leaves the foot control. This increases the likelihood that the tubing will interfere with movement of the chair in which the user is seated. This problem is complicated further by the various positions of the four hole tubing connections required to accommodate various types of dental equipment such as side delivery, front delivery, and rear delivery, all of which have different ideal locations for connecting tubing between the foot control and different types of dental instrument delivery stations.

During the continued development of the invention, it was discovered that it was desirable to use wireless technology to entirely eliminate the four hole tubing connection extending between the foot control and the dental station. Eliminating the four hole tubing connection is an improvement because it allowed the ready reversal of the pivot point of foot plate 11 so plate 11 could be readily configured to enable plate 11 to be rotated either by moving the user's heel through an arc, or, in the alternative, could be configured to enable plate 11 to be rotated by the moving the user's toes through an arc. Significant changes in the basic design of foot control unit 10 illustrated in Figs. 1 to 39 were required to accomplish the goal of using wireless technology to remove the four hole tubing extending between the foot control and a dental station.

The redesigned foot control unit 10A is illustrated in Figs. 40 to 61 and 64 to 68.

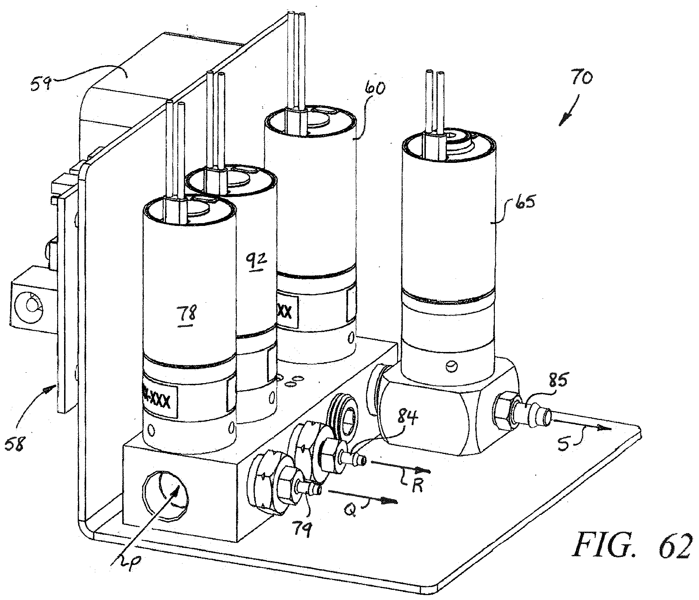

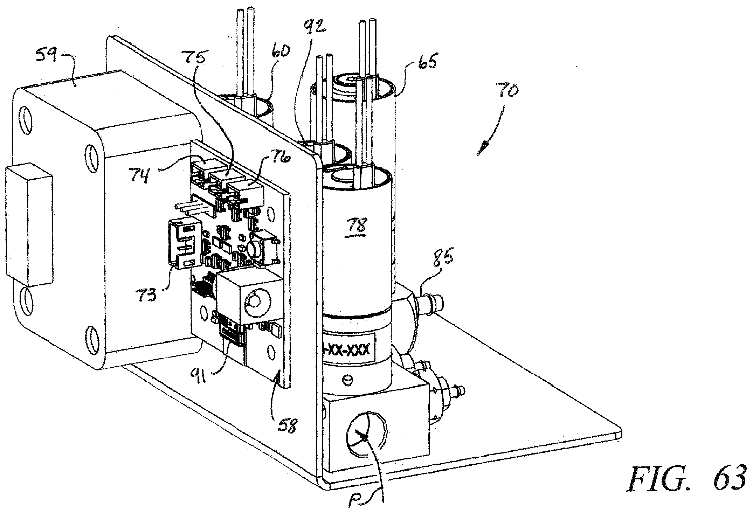

One primary change discovered was the need to relocate the control valves from inside the original foot control unit 10 to the inside or near to the dental station. Another change was eliminating the mechanical valves inside the original foot control 10 and replacing the mechanical valves with electrically operated solenoid valves 60, 65, 78, 92 (Figs. 62, 63). The solenoid valves are located in an electronic valve assembly 70 (Figs. 62, 63) located inside or near to the dental station. The valves 60, 65, 78, 92 (Figs. 62, 63). control the various necessary combinations of air and water flow. Operation of the solenoid valves is controlled remotely by wireless transmission of position information data from the redesigned control unit 10A to transceiver/microprocessor 91 (Fig. 63) located at the electronic valve assembly 70 (Figs. 62, 63) at the dental station. The transceiver/microprocessor 91 (Fig. 63) at the dental station uses position information data transmitted from the control unit 10A, and refers to a preprogrammed "look-up table" to issue appropriate opening and closing instructions to the electrically operated solenoid valves inside the dental station.

In order for the control unit 10A to generate the data and commands necessary for the transceiver/microprocessor 91 at the dental station to control operation of the solenoid valves, the "stack" of cams in the cam block assembly module 20 (Figs. 13, 15, 16) has to be entirely redesigned and new functions must be assigned to each cam.

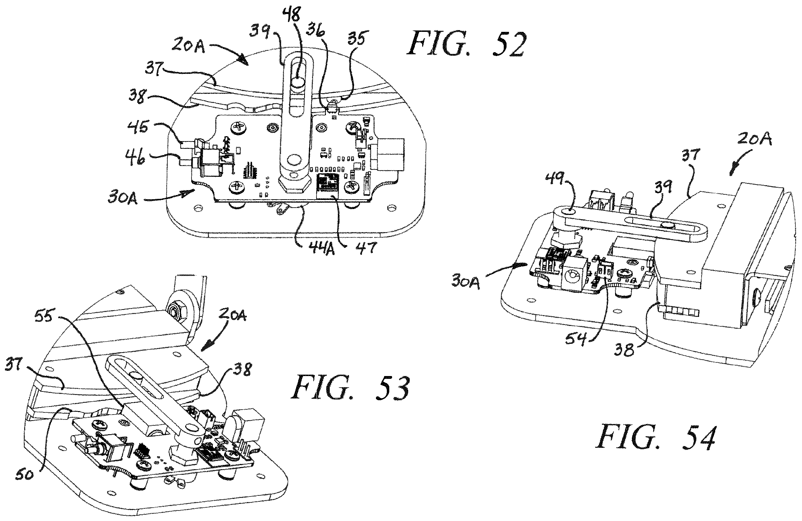

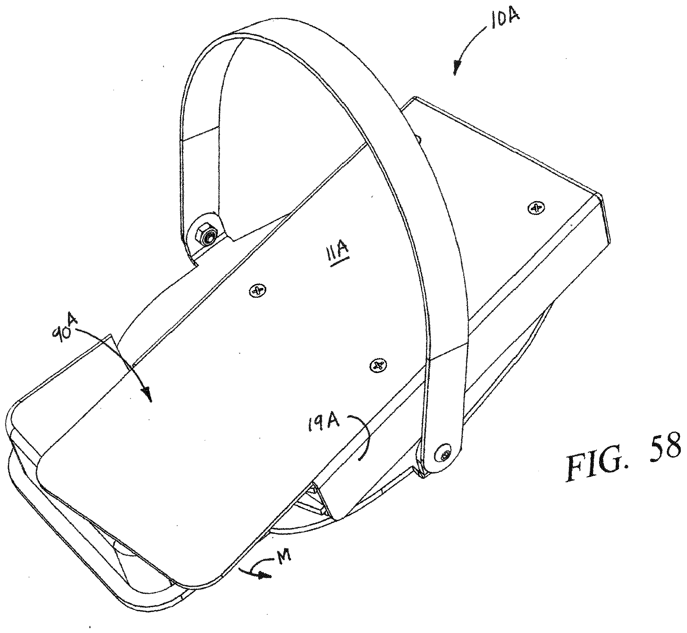

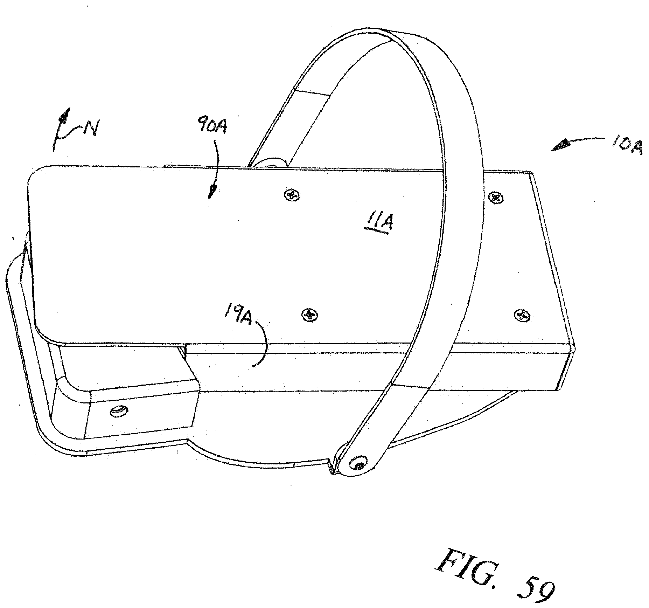

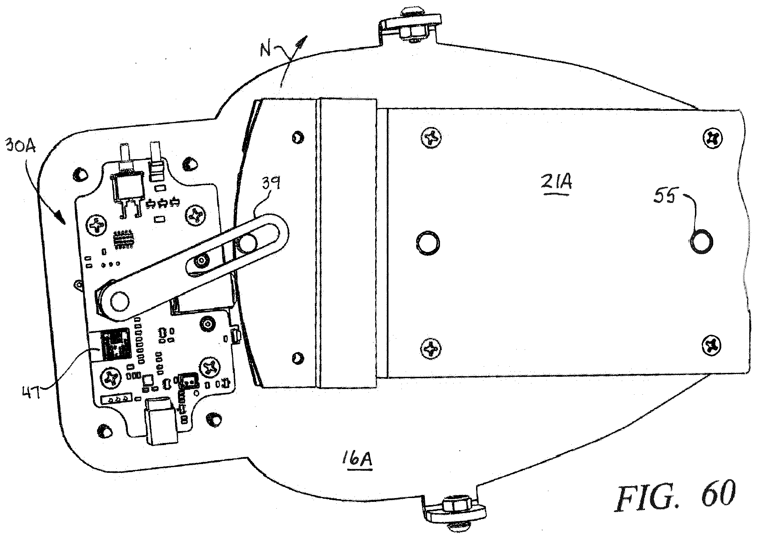

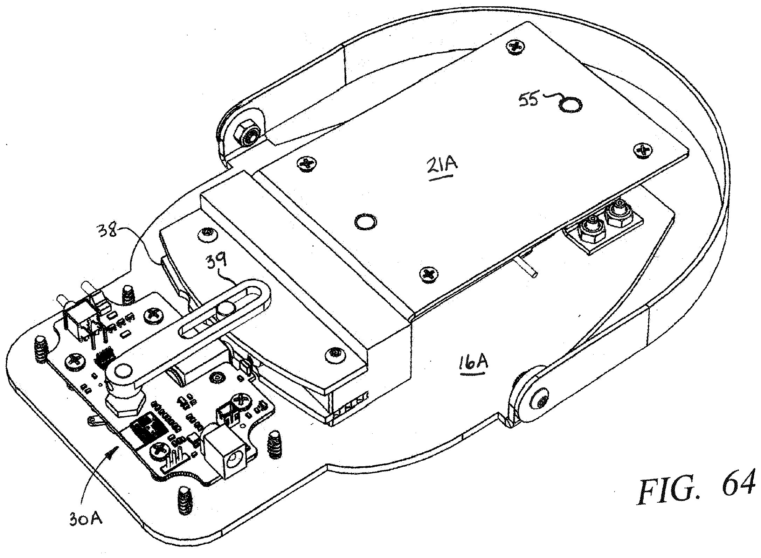

The top cam 40 (Fig. 30) in the original control unit 10 controls coolant water. This cam 40 (Fig. 30) is replaced by a sliding link-and-pivot type cam that controls the rotation of a rotary sensor such as a potentiometer sensor 44A (Fig. 52), Hall effect, or other similar sensor. The rotary sensor generates data indicating the angular position of the foot plate 11A when plate 11A is moved from the neutral position (or "zero degrees" position) (Figs. 40, 41) through an arc to the left (indicated by arrow M in Fig. 58) or to the right (indicated by arrow N in Fig. 59). Data representing the degrees of arc through which foot plate 11A has been rotated to the left or right is encoded and transmitted to transceiver/microprocessor 91 (Fig. 63) in the electronic solenoid valve assembly 70 (Figs. 62, 63). The sliding link and pivot type cam (Figs. 60 and 64) and rotary potentiometer sensor 44A (Figs. 52, 56, 57) provides all of the valve opening and closing information that is provided by the combined information from mechanical cams 40, 41, 42 (Fig. 30) in the original control unit 10.

The center cam 41 (Fig. 28) in the original non-wireless control unit 10 controls the drive air to the drill turbine. In the first instance of the wireless control unit 10A, a Hall effect sensor switch 36 and its corresponding magnet 35 (Fig. 52) replace cam 41. (Fig. 28), and are used to control the "sleep mode" and the "wake-up" mode of the sensor/transmitter circuit board in control unit 10A and in the receiver at the electronic valve assembly 70, (Fig. 62, 63). The Hall effect sensor switch 36 and magnet 35 (Fig 52) replace a lobe on center cam 41 (Fig. 28) and corresponding micro switch and are explained below in the second instance of the wireless foot control 10A. The Hall effect switch and magnet combination of the first instance provide a physical "contactless" switching method which does not mechanically stress the circuit board utilized in control unit 10A.

In the second instance of the wireless electronic control unit 10A cam 41 (Fig. 28) has a lobe (position 35, Fig. 52) on it that corresponds to a circuit board mounted micro switch (position 36, Fig. 52) that is used to activate the "sleep and wake-up" commands for the foot control unit circuit board when the foot control unit is in the neutral centered position. In the second instance the lobe (position 35, Fig. 52) on center cam 41 (Fig. 28) and corresponding micro switch (position 36, Fig. 52) entirely replace the Hall effect sensor switch 36 and magnet 35 by using a corresponding lobe (position 35, Fig. 52) on cam 41 along with a circuit board mounted micro switch (position 36, Fig 52).

The Hall effect switch 36 and magnet 35 (Fig. 52) or the cam lobe (position 35, Fig 52) on cam 41 and corresponding micro switch (position 36, Fig. 52) are alternative methods provided to supply the "sleep" and "wake-up" commands required by conventional wireless transceiver/microprocessor systems to prolong battery life. The Hall effect sensor of the first instance does require some power drain from the battery thereby reducing battery run time while the lobe on cam 41 (Fig. 28) and corresponding micro switch of the second instance do not require any power from the battery thereby giving more battery run time.

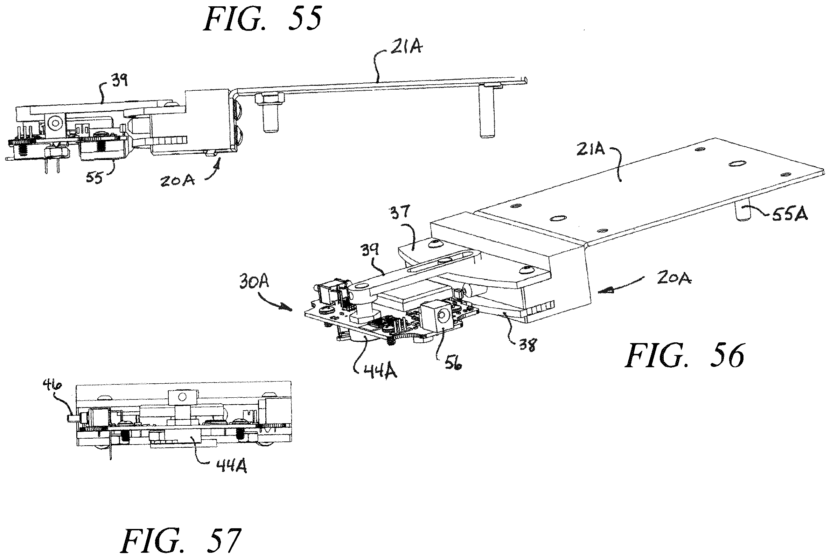

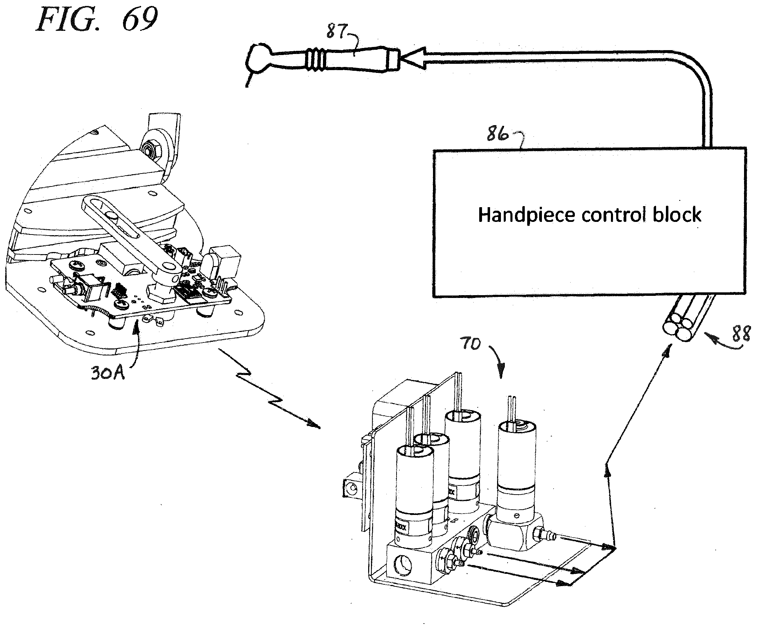

The bottom cam 42 (Fig. 30) in the original control unit 10 was used to control coolant/chip air. In the redesigned wireless electronic version 10A of control unit 10, cam 42 (Fig. 30) is replaced by a cam 38 (Fig. 54) having 1^{st}, 2^{nd}, 3^{rd}, and 4^{th} detents 50 (Fig. 53) at locations that correspond to various combinations of valve openings and closing that produce the desired functions at handpiece 87 (Fig. 69). Detents 50 (1^{st}, 2^{nd}, 3^{rd}, and 4^{th}) are engaged by an adjustable spring loaded ball unit 55 (Fig. 55) to generate positional "feel" for the operator. This is an improvement because the depth of 1^{st}, 2^{nd}, 3^{rd}, and 4^{th} detents 50 and tension of the spring in spring loaded ball unit 55 are more easily varied to control and adjust the generation of positional "feel" because they do not have to perform the function of simultaneously opening mechanical valves the correct amount as in non-wireless control unit 10. The detents 50 on cam 38 now provide all of the sensory input or "feel" information that was previously collectively provided by cams 40, 41, 42 (Fig. 28). All of the detents 50 for "feel" are now on a single cam 38 which is an improvement because it makes it easier to design the profile of cam 38 (Figs. 52, 53,54). The detents on cam 38 work in conjunction with the spring loaded ball unit 55 to make the "feel" correspond to the angular position of the slotted arm of the top sliding link-and-pivot type cam 39, 48, 49 (Figs. 52, 53, 54). The primary goal is to enable the operator to use the detents 50 in cam 38 and his knowledge of the relative locations of various functions to work entirely by "feel" and never divert his visual attention away from the patient work field or change his body position while still controlling multiple functions of the handpiece.

As would be appreciated by those of skill in the art, a variety of sensor systems can be utilized to determine how far plate 11A is rotated from the neutral position of Fig. 40. For example, a rotary Hall effect sensor, rotary encoder, or rotary photo voltaic type sensor could be used in place of potentiometer sensor 44A (Fig. 52).

In Figs. 62 and 63, solenoid valve 60 is a two way "on-off" valve and is in series with proportional solenoid valve 65. Valve combination 60-65 is used as a speed control to proportionally control the air flow which drives the turbine (and therefore the drill) in handpiece 87 (Fig. 69) when footplate 11A is rotated in a range between 1.5° and 8° to the left of center. Input air for valves 60, 92, 78 is indicated by arrow P, (Fig.62, 63). Air exiting nozzle 79 (Fig. 62) is "cooling/chip air" delivered to handpiece 87 (Fig.69). Cooling/chip air is also used to dry a tooth when the drill is not being utilized. and as secondary cooling when the drill is being utilized. Air exiting nozzle 84 (Fig. 62) is "water signal air" used to control an air operated valve that determines whether or not water flows to handpiece 87 (Fig 69). Air exiting nozzle 85 (Fig. 62) is "drive air" delivered to the turbine in handpiece 87 (Fig.69). The proportional electronic valve control unit for drive air is identified by reference character 59 (Fig. 62, 63). Transceiver/microcircuit board 58 (Fig. 62, 63) includes microprocessor 91, electrical outlet/connector 73, and connectors 74, 75, 76 for valves 60, 92, 78, respectively.

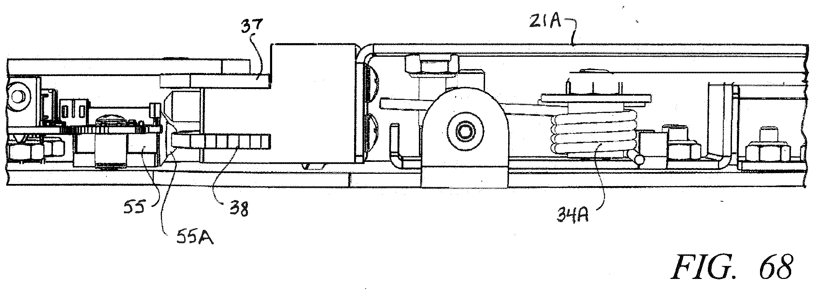

When footplate 11A is in the neutral position shown in Fig. 40, the handpiece or drill 87 (Fig. 69) is off and there is no air or water flow to the handpiece 87. When a user places his foot on plate 11A and utilizes the foot to pivot plate 11A in the direction of arrow N to the right (Fig. 59), the user can "feel" when the "first detent" in cam 38 is reached because the spring loaded ball 55A in unit 55 (Fig. 68) will seat in the "first detent", providing the "feel" of increased resistance to any further movement of plate 11A to the right (or to the left). When plate 11A has been so rotated to the "first detent" (TABLE II, 8° to 10° right) position in which ball 55A is seated in the "first detent," coolant/chip air only is activated and the drill has not been activated and therefore is not running. This enables a tooth to be dried without the drill running and prevents the need for the operator to put down the handpiece and pick up a separate three way syringe to dry the tooth. The user can then, if desired, use his foot to pivot plate 11A further to the right to the "second detent" in cam 38. The user can, once again, "feel" when the "second detent" in cam 38 (which is coincident with the end stop) is reached because the spring loaded ball 55A in unit 55 (Fig. 68) will seat in the "second detent", providing resistance to any further movement of plate 11A to the right. When plate 11A is at the "second detent" position, (TABLE II, 10° to 12° right) the drill does not run, however an air/water spray is produced at handpiece 87 (Fig. 69) so that a tooth can be washed. This function of air/water spray without the drill running for washing the tooth is new and is not available with any directly connected or wireless dental handpiece foot control system other than control unit 10 or 10A. This air/water spray feature prevents the operator from diverting his attention from the patient work field to pick up a separate three way syringe to wash off the tooth and is controlled entirely by "feel" from the single foot control plate 11A to select the various functions. An end stop is provided so that once plate 11A is at the "second detent" position (TABLE II, 10° to 12° right), plate 11A cannot be pivoted further to the right. The solid "feel" of this end stop generates additional position information for the operator.

When a user places his foot on plate 11A and utilizes the foot to pivot plate 11A in the direction of arrow M to the left (Fig. 59) of the neutral position of Fig. 40, the user can "feel" when the "third detent" (TABLE II, 10° to 8° left) in cam 38 is reached because the spring loaded ball 55A in unit 55 (Fig. 68) will seat in the" third detent", providing resistance to any further movement of plate 11A to the left (or to the right). When plate 11A has been so rotated to the "third detent" (TABLE II, 10° to 8° left) position in which ball 55A is seated in the "third detent" the drill in the handpiece 87 is activated at full speed with coolant/chip air but no water flowing to the drill. In addition, as plate 11A is rotated to the left from the neutral position, the speed of the drill increases proportionally from 1.5° left up to 8° left until the "third detent" is reached. Once plate 11A has been rotated to the left a sufficient amount for ball 55A to seat in the "third detent", the drill in the handpiece 87 is operating at its maximum speed with coolant/chip air but without water to "cut dry". The user can then, if desired, use his foot to pivot plate 11A further to the left to the "fourth detent" 50 (Fig. 53) in cam 38 (TABLE II, 12° to 10° left). The user can, once again, "feel" when the "fourth detent" 50 in cam 38 is reached because the spring loaded ball 55A in unit 55 (Fig. 68) will seat in the "fourth detent", providing increased rotational resistance to any further movement of plate 11A to the left. When plate 11A is at the "fourth detent" position (TABLE II, 12° to 10° left), coolant/chip air and water are both activated so that a water spray is produced at the handpiece 87 (Fig. 69) while the drill in the handpiece 87 continues to operate at full speed. An end stop is also provided so that once plate 11A is at the "fourth detent" position, plate 11A cannot be pivoted further to the left thereby providing additional positional information or "feel". Being able to rapidly switch back and forth between the "third detent" and the "fourth detent" with the drill continuing to run at full speed enables the cut wet or cut dry "on the fly" (without stopping the drill) feature which is an important aspect of this invention's ability to increase operator efficiency. Switching rapidly between cutting wet or dry helps to quickly clear the debris and dry the work field sufficiently to maintain much better visibility without having excess water or debris interfere with the operator's view of the tooth preparation. It also avoids the need to pick up and use a separate three way syringe.

TABLE II, PARTS 1, 2, 3, and 4, provides a more detailed illustration of the required valve states and the amount and direction of rotation of foot plate 11A in 0.5° increments from left to right to accomplish the desired functions including the necessary control of drill rotation speed. The information shown in TABLE II corresponds to the information in the "look-up table" that is stored in transceiver/microprocessor 91 (Fig. 63) to issue instructions for controlling the electronic valves in valve assembly 70 (Figs. 62, 63) based on position information transmitted from control unit 10A.

In comparing TABLE I of control unit 10 to TABLE II of control unit 10A it is noted that there are three mechanical valves being utilized inside control unit 10. When using control unit 10A as in TABLE II however, four electronic valves may be required at the dental station because electronic valves 60 and 65 (figs. 62, 63) may be required to operate in series to control drill speed.

The location of **1^{st}, 2^{nd}, 3^{rd}, and 4^{th}** detents for operator "feel" are noted in both TABLE I and TABLE II and are in the same relative locations for both control unit 10 and control unit 10A.

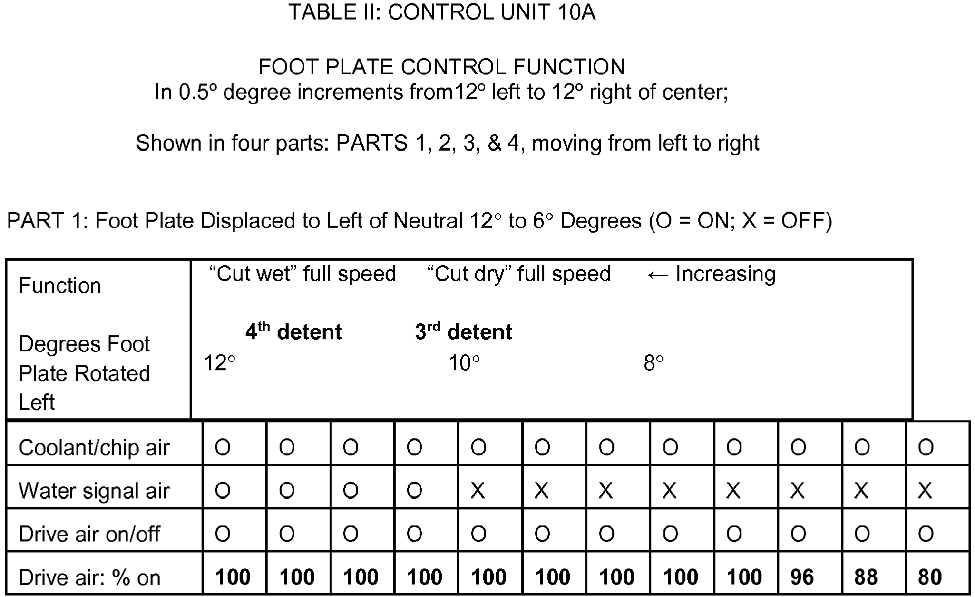

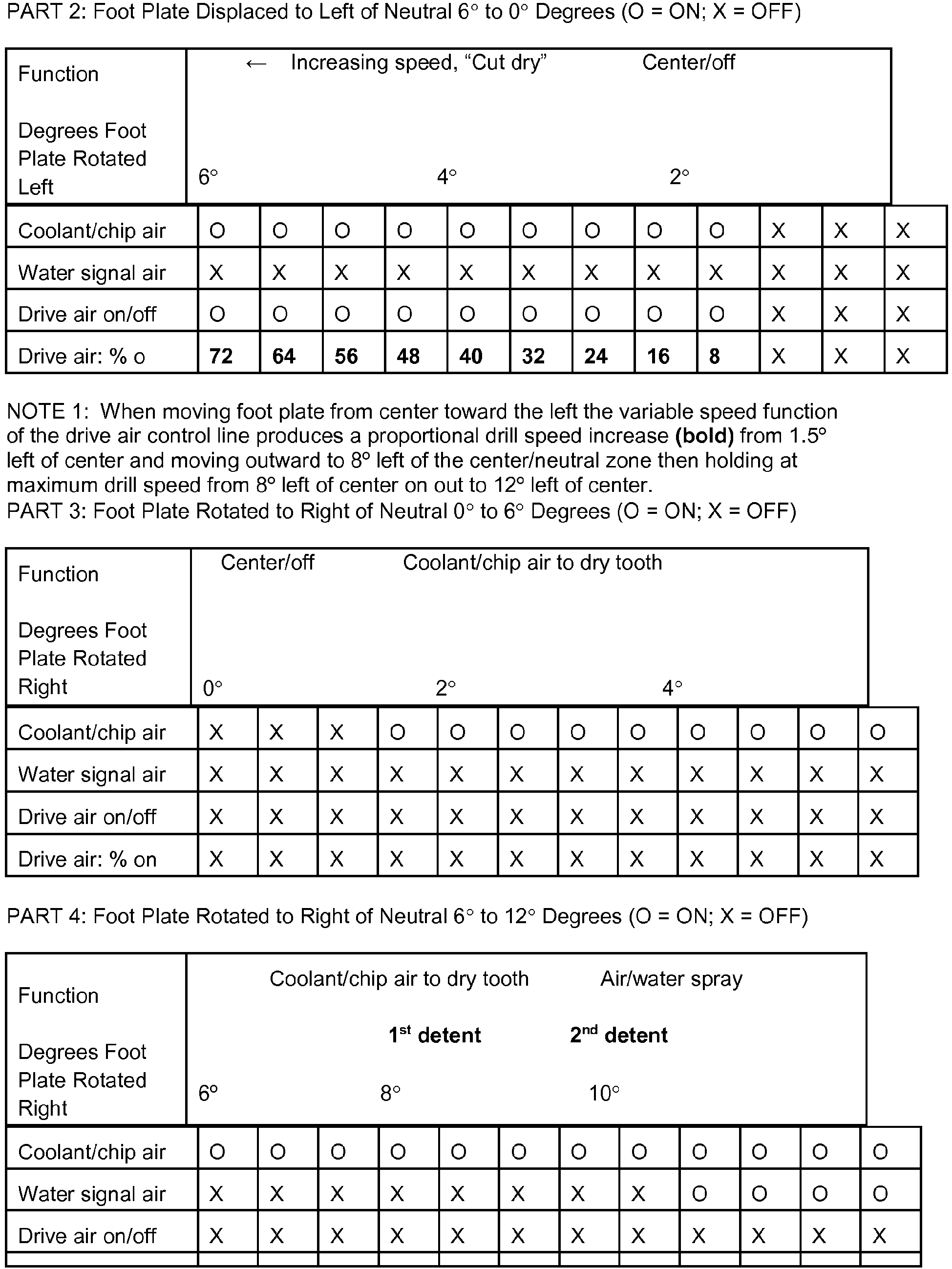

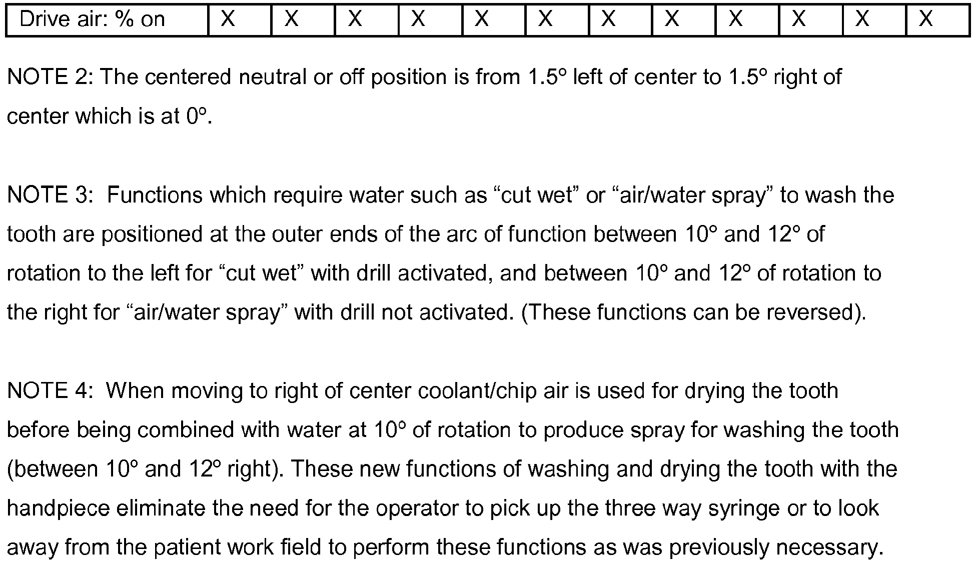

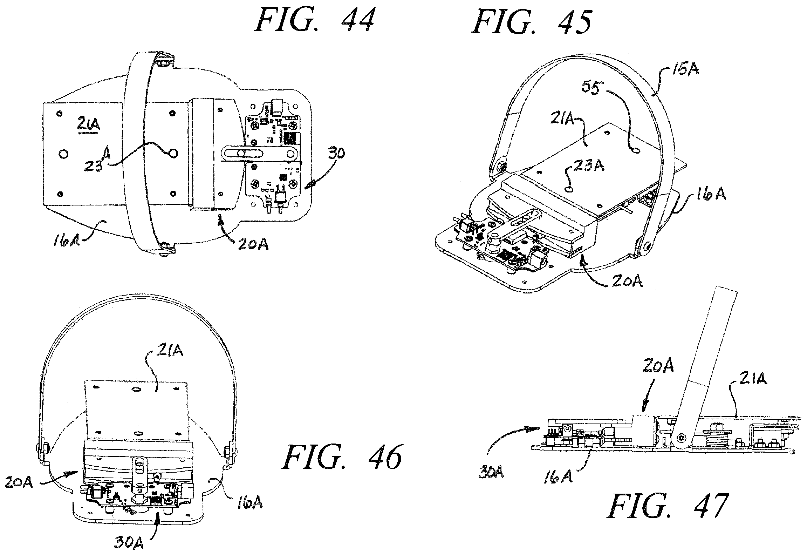

In Figs. 40 to 43, dental control unit 10A includes foot control module 90A, foot plate 11A, and cover 17A. Cover 17A encloses position sensor and wireless transmitter module 30A (Fig. 46) for remote control of valve assembly 70 (Fig. 62, 63).

Foot control module 90A, position sensor and wireless transmitter circuit board of module 30A for remote control of valve assembly 70 (Fig. 62, 63), and other components of dental control unit 10A are mounted on base plate 16A. Screws 12A, 13A or other fasteners are used to secure foot plate 11A to sub-plate 21A (Fig. 45). In Figs. 40 to 43, foot plate 11A is in a torsion spring centered, neutral position. During use of dental control unit 10A, a dentist places on plate 11A one of the shoes (not shown) he is wearing. The heel of the shoe (and heel of the dentist's foot) covers screw 13A and the toe of the shoe points away from screw 13A (In the alternative, if desired the toe of the shoe can cover screw 13A and the heel of the shoe would be on the right hand side of plate 11A in Fig. 40). The dentist presses his foot against plate 11A and then turns his foot-and therefore his shoe-laterally to the left (arrow M in Fig. 58) or right (arrow N in Fig. 59) to pivot simultaneously plate 11A through an arc with his foot. Although the length of the arc through which plate 11A rotates can vary as desired, plate 11A currently laterally rotates to the left about twelve degrees from the neutral position and to the right about twelve degrees from the neutral position. Plate 11A can have an anti-slip surface.

Arcuate hoop or bail 15A is pivotally connected to base plate 16A and, when a dentist places his foot inside the hoop on plate 11A, can be used to move dental control unit 10A. In order to move control unit 10A, the dentist lifts his foot upwardly off plate 11A until his shoe contacts and lifts hoop 15A. Lifting hoop 15A also lifts the other portions of control unit 10A so that control unit 10A can, by moving the dentist's foot to the left or right, be moved to the left or to the right, as desired. Since the operators foot is always positioned inside the hoop and "on" the foot control rather than adjacent to it he does not have to look away from the patient work field to pick it up and move control unit 10A.

In Figs. 44 to 47, the foot plate 11A has been removed from foot control module 90A, exposing sub-plate 21A. Similarly, cover 17A has been removed from over the position sensor and wireless transmitter circuit board of module 30A, exposing position sensor and wireless transmitter circuit board of module 30A.

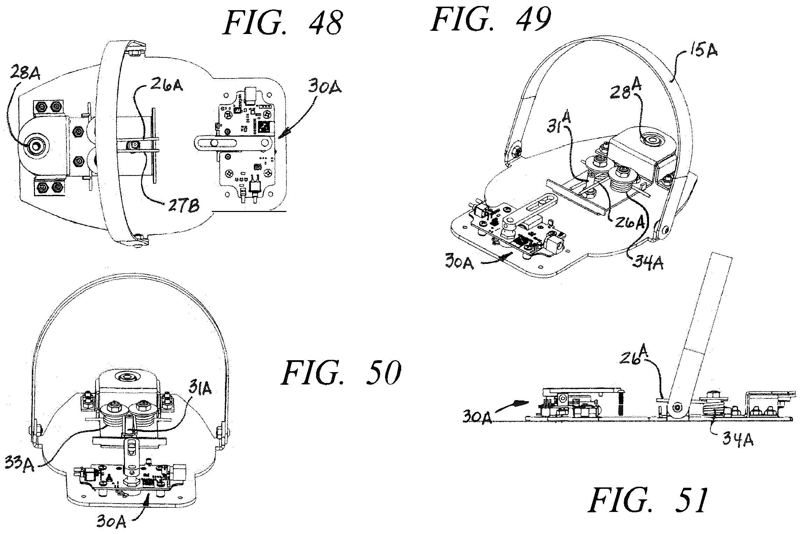

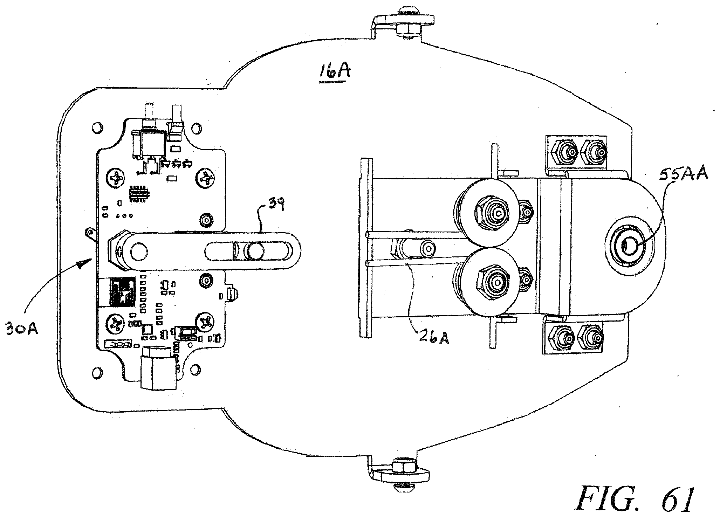

In Figs. 48 to 51, the remainder of the foot control module 90A has been removed to expose the portions of unit 10A on which foot control module 90 is mounted. As will be discussed further below, torsion springs 33A (Fig. 50) and 34A (Fig. 49) include arms 27B and 26A, respectively, which tend to return the foot control module 90A back to the center/neutral position after module 90A is laterally displaced to the left in the direction of arrow M (Fig. 58) or to the right in the direction of arrow N (Fig. 59). Post 55A (Fig. 56) depends and extends downwardly from sub-plate 21A. Post 55A is, when foot control module 90A is mounted as shown in Fig. 1, rotatably received by aperture 55AA (Fig. 61). When control module is laterally displaced from the neutral position to the left or right, post 55A rotates in aperture 55AA.

Torsion springs 33A and 34A function to control movement of sub-plate 21A in the same manner earlier described herein with respect to torsion springs 33 and 34 and sub-plate 21.

In Figs. 52 to 54, position sensor and wireless transmitter circuit board of valve control module 30A is enlarged to better illustrate construction features thereof including pairing switch 46, light pipe 45 for LED indicator, cam 38, cam 37, transceiver/microprocessor 47, spring-loaded ball unit 55 to generate "feel" in conjunction with detents 50 in cam 38, battery connector 54, rotatable pivot pin 49 fixedly connected to slotted arm 39, Hall sensor 36, and magnet 35. When foot control module 90A is pivoted left or right (Figs. 58, 59), pin 48 also moves left or right. When pin 48, which is fixedly secured to cam 37, moves left or right, pin 48 simultaneously pivots slotted arm 39. When slotted arm 39 pivots, it simultaneously pivots pin 49 (Fig. 54). The pivoting movement of pin 49 is detected by potentiometer sensor 44A (Fig. 52) to supply position information to transmitter/microprocessor 47 (Fig. 60) that is used by receiver microprocessor 91 (Fig. 63) in conjunction with a preprogrammed "look-up table" to remotely control valve assembly 70 (Fig. 62, 63).

Figs. 55 to 57 further illustrate position sensor and wireless transmitter module 30A to control valve assembly 70 (Fig.62, 63), cam block assembly module 20A, and sub-plate 21A connected to cam block assembly module 20A. Module 20A includes cams 37 and 38.

Having described my invention in such terms as to enable those skilled in the art to understand and practice it, and having described presently preferred embodiments thereof, I claim:

## Claims

1. In combination with dental apparatus comprising
a dental high speed handpiece including at least one rotatable drill bit and having at least two operative positions,
a primary on operative position in which said drill bit is activated and is rotating,
a secondary off operative position in which said drill bit is deactivated and is stationary,
at least a first control line to deliver pressurized water to the dental handpiece,
at least a second control line to deliver compressed air to the dental handpiece,
at least a third control line to activate and deactivate the drill bit,
the improvements in the dental apparatus comprising a dental control system to operate said first, second, and third control lines, said dental control system comprising
(a) a foot control positioned on a floor and including
(i) a housing,
(ii) a generally horizontally oriented plate pivotally mounted on said housing to be laterally displaceable through an arc by engaging said plate with a foot and pivoting said foot and said plate simultaneously laterally through an arc;
(iii) at least one horizontally oriented cam edge
connected to said plate to move simultaneously with said plate, and
having at least one detent,
(iv) a unit operatively associated with said cam edge to increase the force required to pivot said plate when said detent is in registration with said fixed unit
(v) at least one sensor to
determine the distance said plate is pivotally displaced through an arc from a neutral position,
generate data defining said distance, and
(vi) a transmitter to generate a signal including said data;
(b) a control unit mounted on said dental apparatus remote from said foot control, said control unit including
(i) a plurality of actuable valves fixedly mounted on said unit and operatively associate with said first, second, and third control lines,
(ii) a microprocessor to operate said valves,
(iii) a receiver to receive said signal and transmit said data to said microprocessor to operate said valves.
